# EUROPEAN PATENT APPLICATION

(11) **EP 4 759 528 A1**
(43) Date of publication of application: **17.06.2026**
(21) Application number: 24850684.2
(22) Date of filing: 21.06.2024
(51) Int. Cl.: B29D 30/06

(54) **ELECTRIC CENTER MECHANISM OF COLUMN PULL ROD TYPE TIRE VULCANIZING PRESS**

(30) Priority: 08.08.2023 CN 202322114670 U
(71) Applicant: ARP Technologies (Suzhou) Co., Ltd., Suzhou, Jiangsu 215216 (CN)
(72) Inventor: ZHOU, Jin, Suzhou, Jiangsu 215216 (CN)
(74) Representative: Gill Jennings & Every LLP
(86) International application number: PCT/CN2024/100690
(87) International publication number: WO 2025/031032

(57) **Abstract**

A column-and-tie-rod-type tire vulcanization machine electric center mechanism includes a lower mold (10), a ring seat cylinder head (20), a lower base plate (30), an upper mounting mechanism (40), and a lower ring cylinder (50). The center of the lower mold (10) has a clearance notch. The position of the lower mold (10) is fixed. The center mechanism bladder lower clamp plate (60) is configured to be mounted on the ring seat cylinder head (20). The center of the ring seat cylinder head (20) has a central hole. The center mechanism bladder upper clamp plate (70) is configured to be mounted on the upper mounting mechanism (40). The upper part of the lower mold (10) is provided with the ring seat cylinder head (20). The lower part of the lower mold (10) is connected to the lower base plate (30) by the lower ring cylinder (50). The distance between the lower mold (10) and the lower base plate (30) is driven and guided by the lower ring cylinder (50). The lower base plate (30) is connected to the lower part of the ring seat cylinder head (20) by a guide rod (80).

## Description

This application claims priority to Chinese Patent Application No. 202322114670.3 filed with the China National Intellectual Property Administration (CNIPA) on Aug. 8, 2023, the disclosure of which is incorporated herein by reference in its entirety.

### TECHNICAL FIELD

The present application relates to the field of tire vulcanization machine structures, particularly a column-and-tie-rod-type tire vulcanization machine electric center mechanism.

### BACKGROUND

The center mechanism of a column-and-tie-rod-type tire vulcanization machine in related technologies uses two lower ring oil cylinders to remove a tire from a lower mold and one upper ring oil cylinder to control the extension and retraction of a bladder. Additionally, a hydraulic system is required to provide oil pressure to the cylinders. The oil cylinders and the hydraulic system incur high total costs. The space requirements for the hydraulic system required to drive the cylinders are substantial. Consequently, the entire apparatus occupies a large space, making it unfavorable for the arrangement of other apparatuses in the workshop.

### SUMMARY

The present application provides a column-and-tie-rod-type tire vulcanization machine electric center mechanism. In the column-and-tie-rod-type tire vulcanization machine electric center mechanism, the vertical extension and retraction of a bladder are achieved through an electric servo mechanism, and tire demolding is achieved through a lower ring cylinder. This minimizes the space occupied by the power source, thereby reducing the overall space occupied by the apparatus.

Embodiments of the present application provide a column-and-tie-rod-type tire vulcanization machine electric center mechanism. The column-and-tie-rod-type tire vulcanization machine electric center mechanism includes a lower mold, a ring seat cylinder head, a lower base plate, an upper mounting mechanism, and a lower ring cylinder.

The center of the lower mold has a clearance notch. The position of the lower mold is fixed.

The center mechanism bladder lower clamp plate is configured to be mounted on the ring seat cylinder head. The center of the ring seat cylinder head has a central hole.

The center mechanism bladder upper clamp plate is configured to be mounted on the upper mounting mechanism.

The upper part of the lower mold is provided with the ring seat cylinder head. The lower part of the lower mold is connected to the lower base plate by the lower ring cylinder. The distance between the lower mold and the lower base plate is driven and guided by the lower ring cylinder. The lower base plate is connected to the lower part of the ring seat cylinder head by a guide rod.

The lower base plate is provided with a vertically arranged ball screw. A ball nut surrounds the ball screw. The ball nut is integrated at the lower part of a central rod. The lower middle part of the central rod is a hollow cylinder. The upper part of the central rod passes through the central hole of the ring seat cylinder head and is securely connected to the upper mounting mechanism. The lower part of the ball screw is configured to be connected to an electric device.

### BRIEF DESCRIPTION OF DRAWINGS

FIG. 1 is a perspective view of the present application.
FIG. 2 is a front view of the present application (with a lower mold removed).
FIG. 3 is a side view of the present application (with a lower mold removed).
FIG. 4 is a section view of the present application (with a lower mold removed).
FIG. 5 is a diagram of a bladder in the extended state during the use of the present application.
FIG. 6 is a diagram of a bladder in the retracted state during the use of the present application.

### Reference list

10. lower mold; 20. ring seat cylinder head; 30. lower base plate; 40. upper mounting mechanism; 50. lower ring cylinder; 51. lower piston rod; 60. lower chuck of the bladder in the center mechanism; 70. center mechanism bladder upper clamp plate; 80. guide rod; 90. ball screw; 100. ball nut; 110. central rod; 111. hollow cylinder; 120. fixed sleeve; 121. hollow guide sleeve; 130. lateral servo motor; 140. steering output reducer; 150. coupling; 160. auxiliary mounting plate; 170. position sensing switch; 180. bladder mechanism; 190. tire

### DETAILED DESCRIPTION

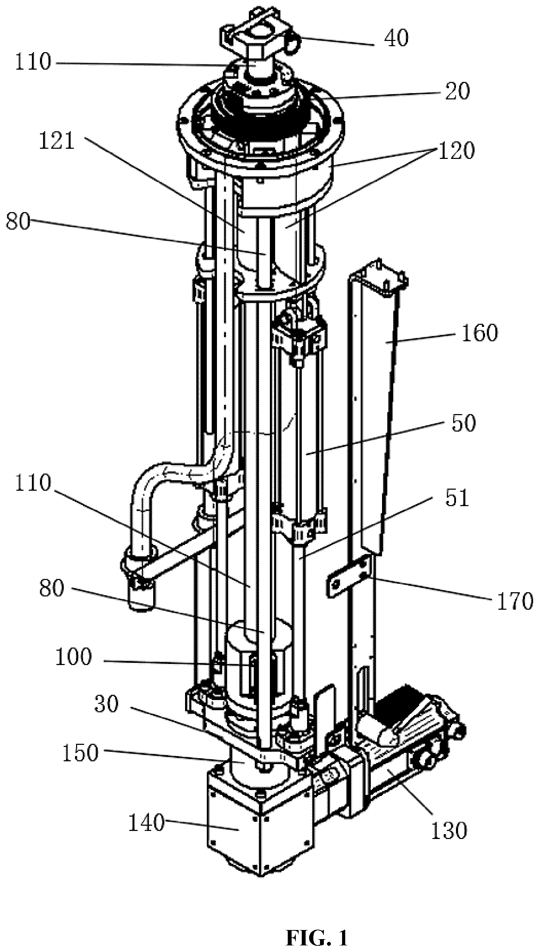

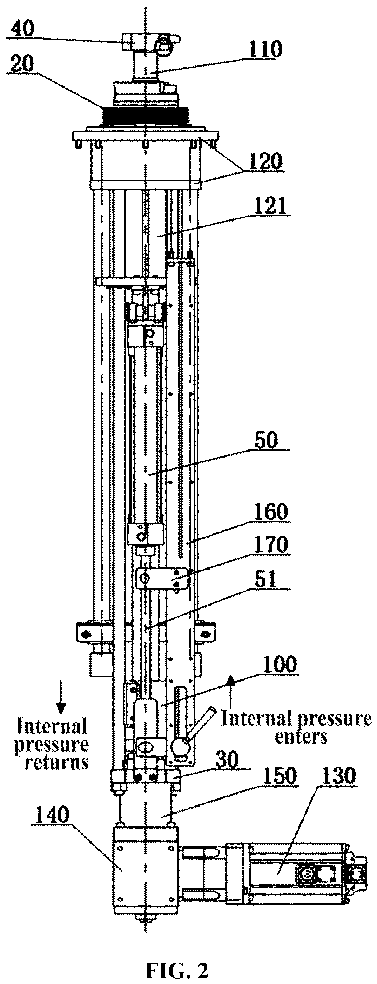

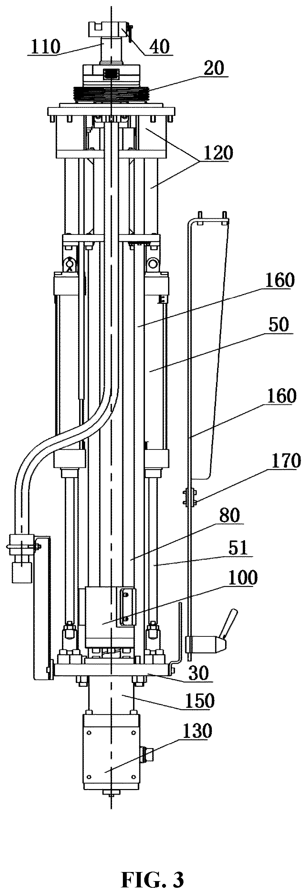

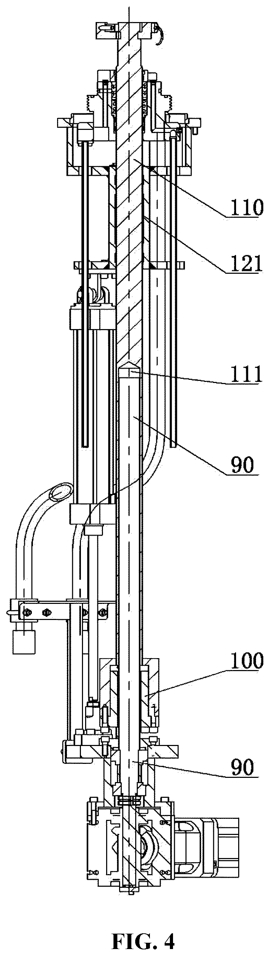

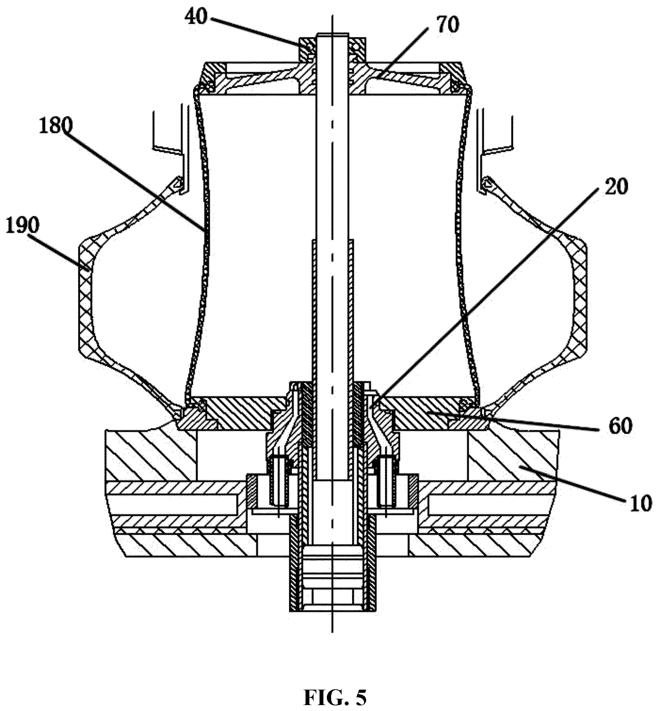

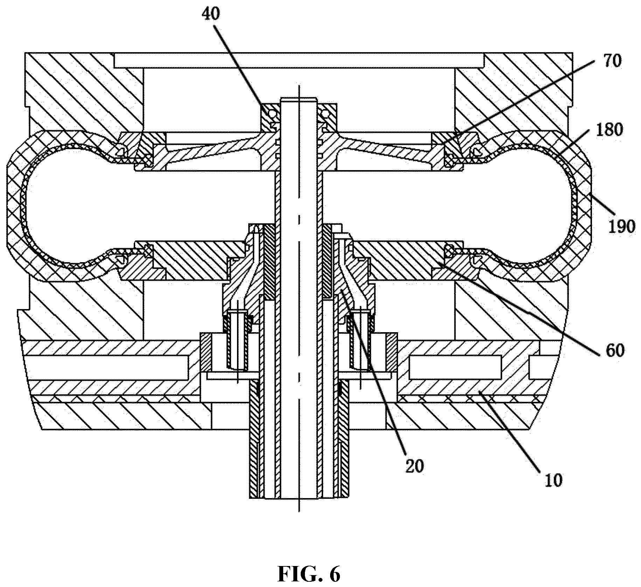

A column-and-tie-rod-type tire vulcanization machine electric center mechanism is provided. As shown in FIGS. 1 to 6, the column-and-tie-rod-type tire vulcanization machine electric center mechanism includes a lower mold 10, a ring seat cylinder head 20, a lower base plate 30, an upper mounting mechanism 40, and at least two lower ring cylinders 50.

The center of the lower mold 10 has a clearance notch. The position of the lower mold 10 is fixed.

The center mechanism bladder lower clamp plate 60 is configured to be mounted on the ring seat cylinder head 20. The center of the ring seat cylinder head 20 has a central hole.

The center mechanism bladder upper clamp plate 70 is configured to be mounted on the upper mounting mechanism 40.

The upper part of the lower mold 10 is provided with the ring seat cylinder head 20. The lower part of the lower mold 10 is connected to the lower base plate 30 by the lower ring cylinder 50. The distance between the lower mold 10 and the lower base plate 30 is driven and guided by the lower ring cylinder 50. The lower base plate 30 is connected to the lower part of the ring seat cylinder head 20 by a guide rod 80.

The lower base plate 30 is provided with a vertically arranged ball screw 90. A ball nut 100 surrounds the ball screw 90. The ball nut 100 is integrated at the lower part of a central rod 110. The lower middle part of the central rod 110 is a hollow cylinder 111. The upper part of the central rod 110 passes through the central hole of the ring seat cylinder head 20 and is securely connected to the upper mounting mechanism 40. The lower part of the ball screw 90 is configured to be connected to an electric device.

In some embodiments, a fixed sleeve 120 is disposed at the clearance notch of the lower mold 10, the fixed sleeve 120 is securely connected to the lower mold 10, the center of the fixed sleeve 120 has a hollow guide sleeve 121, and the central rod 110 passes through the hollow guide sleeve 121 and the central hole of the ring seat cylinder head 20 and protrudes upwards. The hollow guide sleeve 121 ensures that the central rod 110 can perform only lifting operations and ensures that the lifting of the central rod 110 is stable and reliable.

The upper surface of the fixed sleeve 120 is configured to define the lower limit position of the ring seat cylinder head 20 in a mold closing state, ensuring the reliable downward movement of the lower ring cylinder 50.

In some embodiments, the lower part of the guide rod 80 passes through a corresponding lateral end of the ball nut 100. Since the lower part of the central rod 110 is secured to the ball nut 100, the guide rod 80 ensures that the central rod cannot rotate.

In some embodiments, two lower ring cylinders 50 are provided. The two lower ring cylinders 50 are arranged on two sides of the central rod 110. A lower piston rod 51 of each of the two lower ring cylinders 50 is securely connected to a corresponding position of the lower base plate 30. The lower base plate 30 is securely connected to a lower position of the ring seat cylinder head 20 by guide rods 80 on the two sides. Each guide rod 80 passes through a corresponding position of the fixed sleeve 120. During operation, the two lower ring cylinders 50 go up and down synchronously.

In some embodiments, the electric device includes a servo motor and a reducer. The servo motor is a lateral servo motor 130. The reducer is a steering output reducer 140. The lateral servo motor 130 is arranged laterally. The output end of the lateral servo motor 130 is connected to the input end of the steering output reducer 140. The output end of the steering output reducer 140 is connected to the lower end of the ball screw 90 by a coupling 150. This arrangement ensures stable and reliable transmission and ensures that the mechanism does not occupy too much vertical space.

In some embodiments, an auxiliary mounting plate 160 is mounted on the lower mold 10. A position sensing switch 170 is disposed on the auxiliary mounting plate 160. The position sensing switch 170 is configured to sense the position of the ball nut 100, ensuring stable and reliable operation.

In the drawings, the number 180 represents a bladder mechanism, and the number 190 represents a tire.

Embodiments of the present application provide a column-and-tie-rod-type tire vulcanization machine electric center mechanism, eliminating a hydraulic system and two lower ring oil cylinders and one upper ring oil cylinder per mold. The central rod 110 is bolted to the ball nut 100. The ball screw 90 is driven by the electric device to move the ball nut 100 and the central rod 110 up and down, thereby achieving the expansion and contraction of the bladder. Moreover, the relative motion of the ball screw 90 and the ball nut 100 can precisely control the positioning of the expansion and contraction of the bladder. Additionally, when the lower output end of the lower ring cylinder 50 retracts upward, it drives the ring seat cylinder head 20 to rise relative to the fixed lower mold 10, causing the tire 190 to detach from the lower mold 10 and complete the demolding. The expansion and contraction of the bladder are achieved by the electric servo mechanism. The tire 190 is demolded by the lower ring cylinder 50. This reduces the space occupied by the power source and decreases the overall space occupation of the apparatus.

## Claims

1. A column-and-tie-rod-type tire vulcanization machine electric center mechanism, comprising:
a lower mold (10), wherein a center of the lower mold (10) has a clearance notch, and a position of the lower mold (10) is fixed;
a ring seat cylinder head (20), wherein a center mechanism bladder lower clamp plate (60) is configured to be mounted on the ring seat cylinder head (20), and a center of the ring seat cylinder head (20) has a central hole;
a lower base plate (30);
an upper mounting mechanism (40), wherein a center mechanism bladder upper clamp plate (70) is configured to be mounted on the upper mounting mechanism (40); and
a lower ring cylinder (50),
wherein an upper part of the lower mold (10) is provided with the ring seat cylinder head (20), a lower part of the lower mold (10) is connected to the lower base plate (30) by the lower ring cylinder (50), a distance between the lower mold (10) and the lower base plate (30) is driven and guided by the lower ring cylinder (50), and the lower base plate (30) is connected to a lower part of the ring seat cylinder head (20) by a guide rod (80); and
wherein the lower base plate (30) is provided with a vertically arranged ball screw (90), a ball nut (100) surrounds the ball screw (90), the ball nut (100) is integrated at a lower part of a central rod (110), a lower middle part of the central rod (110) is a hollow cylinder (111), an upper part of the central rod (110) passes through the central hole of the ring seat cylinder head (20) and is securely connected to the upper mounting mechanism (40), and a lower part of the ball screw (90) is configured to be connected to an electric device.

2. The column-and-tie-rod-type tire vulcanization machine electric center mechanism of claim 1, wherein a fixed sleeve (120) is disposed at the clearance notch of the lower mold (10), the fixed sleeve (120) is securely connected to the lower mold (10), a center of the fixed sleeve (120) has a hollow guide sleeve (121), and the central rod (110) passes through the hollow guide sleeve (121) and the central hole of the ring seat cylinder head (20) and protrudes upwards.

3. The column-and-tie-rod-type tire vulcanization machine electric center mechanism of claim 2, wherein an upper surface of the fixed sleeve (120) is configured to define a lower limit position of the ring seat cylinder head (20) in a mold closing state.

4. The column-and-tie-rod-type tire vulcanization machine electric center mechanism of claim 2, wherein a lower part of the guide rod (80) passes through a corresponding lateral end of the ball nut (100).

5. The column-and-tie-rod-type tire vulcanization machine electric center mechanism of claim 1, wherein two lower ring cylinders (50) are provided, the two lower ring cylinders (50) are arranged on two sides of the central rod (110), a lower piston rod (51) of each of the two lower ring cylinders (50) is securely connected to a corresponding position of the lower base plate (30), and the lower base plate (30) is securely connected to a lower position of the ring seat cylinder head (20) by the guide rod (80).

6. The column-and-tie-rod-type tire vulcanization machine electric center mechanism of claim 1, wherein the electric device comprises a servo motor and a reducer, wherein an output end of the servo motor is connected to a lower end of the ball screw (90) by the reducer.
